# EUROPEAN PATENT APPLICATION

(11) **EP 4 660 804 A1**
(43) Date of publication of application: **10.12.2025**
(21) Application number: 24217208.8
(22) Date of filing: 03.12.2024
(51) Int. Cl.: G06F 9/50, G06F 11/30, G06F 11/34

(54) **WORKLOAD PREDICTION METHODS AND APPARATUSES FOR SERVICE IN SERVICE CLUSTER**

(30) Priority: 07.06.2024 CN 202410742222
(71) Applicant: Alipay (Hangzhou) Information Technology Co., Ltd., Hangzhou, Zhejiang 310000 (CN); Shanghai Jiao Tong University, Shanghai 200240 (CN)
(72) Inventor: XU, Kexin, Hangzhou, Zhejiang Province, 310000 (CN); YU, Zhemeng, Hangzhou, Zhejiang Province, 310000 (CN); CAI, Tengwei, Hangzhou, Zhejiang Province, 310000 (CN); GAO, Xiaofeng, Shanghai (CN)
(74) Representative: Winter, Brandl - Partnerschaft mbB

(57) **Abstract**

Embodiments of this specification provide a workload prediction method and apparatus for a service in a service cluster. The method includes: obtaining a load indicator sequence of each service in a service cluster corresponding to a workload indicator in a same historical time period; determining, based on the load indicator sequence corresponding to each service, a service representation corresponding to each service; performing clustering processing based on the service representation corresponding to each service, to obtain a target category cluster to which each service belongs in multiple category clusters; obtaining multiple sequence prediction models pre-trained for multiple tasks, and enabling the multiple category clusters to correspond to the multiple tasks; and inputting at least a load indicator sequence of any service into a target sequence prediction model corresponding to a target category cluster of the service in the multiple sequence prediction models.

## Description

### TECHNICAL FIELD

One or more embodiments of this specification relate to the computer field, and in particular, to workload prediction methods and apparatuses for a service in a service cluster.

### BACKGROUND

With the widespread use of cloud computing and online computing services, there is an increasing demand for predicting a task volume of a service in a service cluster, and the task volume of the service is also referred as workload of the service. Future data of workload of a service is often predicted based on historical data of the workload of the service, and the historical data may contain privacy information.

In the existing technology, there are some problems in workload prediction for a service in a service cluster. First, most prediction solutions can only perform prediction for specific types of services, and cannot satisfy diversified online computing service demands. Second, prediction precision of the existing prediction solution is limited, and future workload cannot be accurately predicted, thereby causing a waste of resources or a shortage of resources.

### SUMMARY

One or more embodiments of this specification describe a workload prediction method and apparatus for a service in a service cluster, which can satisfy diversified online computing service demands and improve prediction accuracy.

According to a first aspect, a workload prediction method for a service in a service cluster is provided, including:
obtaining a load indicator sequence of each service in the service cluster corresponding to a workload indicator in a same historical time period;
determining, based on the load indicator sequence corresponding to each service, a service representation corresponding to each service;
performing clustering processing based on the service representation corresponding to each service, to obtain a target category cluster to which each service belongs in multiple category clusters;
obtaining multiple sequence prediction models pre-trained for multiple tasks, and enabling the multiple category clusters to correspond to the multiple tasks, so as to correspond to the multiple sequence prediction models; and
inputting at least a load indicator sequence of any service into a target sequence prediction model corresponding to a target category cluster of the service in the multiple sequence prediction models, to obtain a first prediction value of a workload indicator corresponding to the service at a target moment after the historical time period.

In a possible implementation, determining the service representation corresponding to each service includes:
obtaining a system indicator sequence of a system status indicator of each service and related to workload, and obtaining, based on the system indicator sequence, a first representation corresponding to each service;
determining, based on the load indicator sequence corresponding to each service, a second representation corresponding to each service; and
performing combination processing on a first representation of any service and a second representation of the service, to obtain a service representation corresponding to the service.

Further, the workload indicator includes a number of CPU cores used; and the system status indicator includes at least one of the following: a system response time, CPU utilization, and a number of CPU requests.

Further, obtaining the first representation corresponding to each service includes:
determining an initial code of each service based on the system indicator sequence of each service; and
inputting the initial code corresponding to each service into a first neural network to obtain the first representation corresponding to each service.

Further, determining the second representation corresponding to each service includes:
inputting a load indicator sequence corresponding to any service into a second neural network that performs time sequence processing, to obtain a time sequence representation corresponding to the service as a second representation of the service.

In a possible implementation, enabling the multiple category clusters to correspond to the multiple tasks includes:
determining, based on service representations respectively corresponding to each service corresponding to a same target category cluster, a category representation corresponding to the target category cluster; and
enabling each category cluster to correspond to each task based on a category representation of each category cluster and task description information of each task.

Further, inputting at least the load indicator sequence of any service into the target sequence prediction model corresponding to the target category cluster of the service in the multiple sequence prediction models includes:
inputting the load indicator sequence of the any service and a category representation of the target category cluster corresponding to the service into the target sequence prediction model.

In a possible implementation, the multiple sequence prediction models are trained in the following manners:
determining, through a first training phase, a target initialization parameter shared by the multiple sequence prediction models; and
separately updating each sequence prediction model based on the target initialization parameter through a second training phase.

Further, the first training phase includes multiple rounds of iterations, and any round of iteration includes:
obtaining a current initialization parameter shared by the multiple sequence prediction models;
for a sequence prediction model corresponding to any task, updating the current initialization parameter based on a first training sample set corresponding to the task, to obtain a current dedicated model of the task;
determining a single prediction loss of a current dedicated model corresponding to any task for the first test sample set under the task; and
updating the current initialization parameter based on a sum of single prediction losses respectively corresponding to the tasks.

Further, the second training phase includes:
for a sequence prediction model corresponding to any task, updating the target initialization parameter by using a second training sample set under the task, to obtain a dedicated parameter of the task.

In a possible implementation, the method further includes:
obtaining, by using the target sequence prediction model, a predicted change trend of the workload indicator corresponding to the service at the target moment after the historical time period relative to a current moment.

According to a second aspect, a workload prediction apparatus for a service in a service cluster is provided, including:
an acquisition unit, configured to obtain a load indicator sequence of each service in the service cluster corresponding to a workload indicator in a same historical time period;
a representation unit, configured to determine, based on the load indicator sequence corresponding to each service as obtained by the acquisition unit, a service representation corresponding to each service;
a clustering unit, configured to perform clustering processing based on the service representation corresponding to each service as obtained by the representation unit, to obtain a target category cluster to which each service belongs in multiple category clusters;
a matching unit, configured to: obtain multiple sequence prediction models pre-trained for multiple tasks, and enable the multiple category clusters obtained by the clustering unit to correspond to the multiple tasks, so as to correspond to the multiple sequence prediction models; and
a prediction unit, configured to input at least a load indicator sequence of any service as obtained by the acquisition unit into a target sequence prediction model corresponding to a target category cluster of the service as obtained by the matching unit in the multiple sequence prediction models, to obtain a first prediction value of a workload indicator corresponding to the service at a target moment after the historical time period.

According to a third aspect, a computer-readable storage medium that stores a computer program is provided, and when the computer program is executed on a computer, the computer is caused to perform the method of the first aspect.

According to a fourth aspect, a computing device is provided, including a memory and a processor, where the memory stores executable code, and when executing the executable code, the processor implements the method according to the first aspect.

According to the method and the apparatus provided in the embodiments of this specification, first, a load indicator sequence of each service in a service cluster corresponding to a workload indicator in a same historical time period is obtained; then, a service representation corresponding to each service is determined based on the load indicator sequence corresponding to each service; then, clustering processing is performed based on the service representation corresponding to each service, to obtain a target category cluster to which each service belongs in multiple category clusters; then, multiple sequence prediction models pre-trained for multiple tasks are obtained, and the multiple category clusters are enabled to correspond to the multiple tasks, so as to correspond to the multiple sequence prediction models; and finally, at least a load indicator sequence of any service is input into a target sequence prediction model corresponding to a target category cluster of the service in the multiple sequence prediction models, to obtain a first prediction value of a workload indicator corresponding to the service at a target moment after the historical time period. It can be understood from the above-mentioned description that, in the embodiments, multiple sequence prediction models are pre-trained for multiple tasks, which is different from a unified model: The unified model uses a set of parameters for all services. Therefore, there is a limitation in capturing data changes in a large region, a result of thereof preferentially considers some services, and performance for other services is much worse. A clustering-based model can alleviate these disadvantages, determine, based on a load indicator sequence corresponding to each service, a service representation corresponding to each service, perform clustering processing on the service representation of each service, find a corresponding sequence prediction model according to a clustering result, and predict workload, so as to satisfy diversified online computing service demands and improve prediction accuracy.

### BRIEF DESCRIPTION OF DRAWINGS

To describe the technical solutions in the embodiments of this specification more clearly, the following briefly describes the accompanying drawings needed for describing the embodiments. Clearly, the accompanying drawings in the following descriptions show merely some embodiments of this specification, and a person of ordinary skill in the art can still derive other drawings from these accompanying drawings without creative efforts.
FIG. 1 is a schematic diagram illustrating an implementation scenario, according to an embodiment of this specification;
FIG. 2 is a flowchart illustrating a workload prediction method for a service in a service cluster, according to an embodiment.
FIG. 3 is a schematic diagram illustrating a generation manner of a first representation, according to an embodiment;
FIG. 4 is a schematic diagram illustrating a generation manner of a second representation, according to an embodiment;
FIG. 5 is a schematic diagram illustrating a training manner of multiple sequence prediction models, according to an embodiment; and
FIG. 6 is a schematic block diagram illustrating a workload prediction apparatus for a service in a service cluster, according to an embodiment.

### DESCRIPTION OF EMBODIMENTS

The solutions provided in this specification are described below with reference to the accompanying drawings.

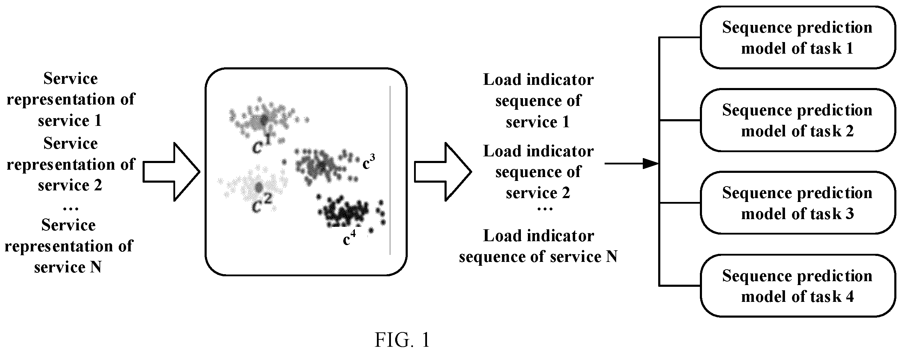

FIG. 1 is a schematic diagram illustrating an implementation scenario, according to an embodiment of this specification. The implementation scenario relates to workload forecasting for a service in a service cluster. It can be understood that the service cluster includes multiple services, and generally, based on historical workload of any service, a unified model is used to predict future workload of the service, which cannot satisfy diversified online computing service demands and cannot accurately predict future workload.

Referring to FIG. 1, in this embodiment of this specification, multiple sequence prediction models are pre-trained for multiple tasks. For example, sequence prediction models respectively corresponding to four tasks are pre-trained, including a sequence prediction model of a task 1, a sequence prediction model of a task 2, a sequence prediction model of a task 3, and a sequence prediction model of a task 4. When workload of a service in a service cluster is predicted, a service representation corresponding to each service is determined based on a load indicator sequence corresponding to each service. For example, a service representation of a service 1 is determined based on a load indicator sequence of the service 1, a service representation of a service 2 is determined based on a load indicator sequence of the service 2, ..., and a service representation of a service N is determined based on a load indicator sequence of the service N. Cluster processing is performed on service representations of the services. For example, the service 1 to the service 10 are clustered into a category cluster c¹, a service 11 to a service 20 are clustered into a category cluster c², a service 21 to a service 30 are clustered into a category cluster c³, and a service 31 to the service N are clustered into a category cluster c⁴. A sequence prediction model corresponding to any service is found according to a clustering result. For example, if the category cluster c¹ is corresponding to the task 1, the service 1 to the service 10 are corresponding to the sequence prediction model of the task 1; if the category cluster c² is corresponding to the task 2, the service 11 to the service 20 are corresponding to the sequence prediction model of the task 2; if the category cluster c³ is corresponding to the task 3, the service 21 to the service 30 are corresponding to the sequence prediction model of the task 3; and if the category cluster c⁴ is corresponding to the task 4, the service 31 to the service N are corresponding to the sequence prediction model of the task 4. A sequence prediction model corresponding to any service is used to predict workload of the service. For example, the load indicator sequence of the service 1 is input into the sequence prediction model of the task 1 to obtain a prediction value of a workload indicator of the service 1, and the load indicator sequence of the service 11 is input into the sequence prediction model of the task 2 to obtain a prediction value of a workload indicator of the service 11. This is able to satisfy diversified online computing service demands and improve prediction accuracy.

Workload prediction is prediction of a task volume, which is essential for optimizing resource planning, service-level agreement (SLA) compliance, cost control, and fault tolerance in a cloud environment. Accurate task volume prediction can improve system efficiency and stability, provide better service experience for users, and improve overall operating benefits of the cloud environment.

In terms of resource planning, accurate task volume prediction can help cloud environment managers better plan resources. According to a task volume prediction result, computing, storage, and network resources can be properly allocated, so as to ensure that the system can satisfy demands during peak or valley periods. As such, the problem of resource waste or insufficient resources can be avoided, and resource utilization can be improved.

In terms of SLA compliance, task volume prediction can help cloud environment providers better comply with the SLA. With accurate task volume prediction, system configuration and resource allocation can be adjusted to satisfy performance indicators specified in the SLA, such as response time and throughput. This helps ensure customer satisfaction and avoids the risk of SLA violations.

In terms of cost control, accurate task volume prediction helps cloud environment managers control costs. With task volume prediction, resource inputs can be adjusted according to demands, avoiding over-input or under-input. As such, costs in hardware, energy, and maintenance can be reduced, and resource utilization efficiency can be improved, thereby reducing overall operating costs.

In terms of fault tolerance, task volume prediction plays an important role in fault tolerance. With task volume prediction, fault tolerance mechanisms and disaster recovery plans can be better designed. In the event of a failure or unpredictability, task volume prediction can help the system quickly adjust and recover to minimize impact on users.

In conclusion, based on significance of task volume prediction, diversified online computing service demands need to be satisfied, and prediction accuracy needs to be improved.

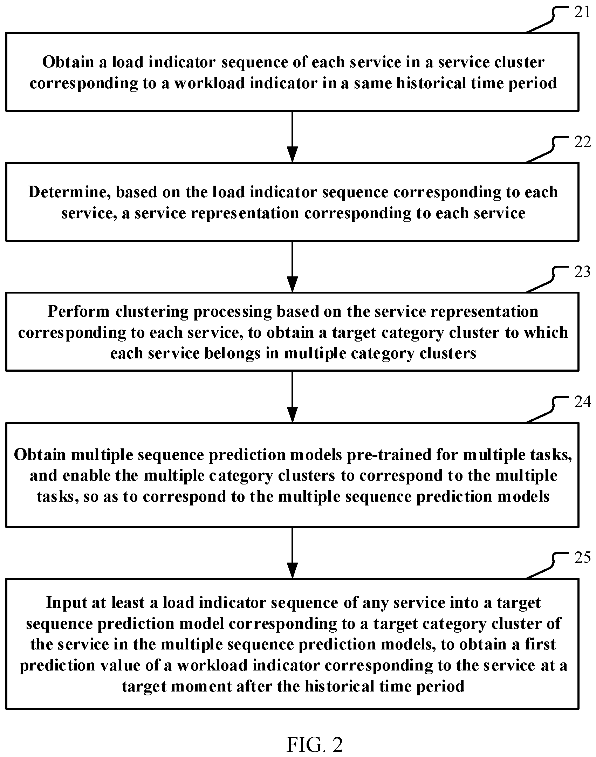

FIG. 2 is a flowchart illustrating a workload prediction method for a service in a service cluster, according to an embodiment. The method can be based on the implementation scenario shown in FIG. 1. As shown in FIG. 2, the workload prediction method for a service in a service cluster in this embodiment includes the following steps: Step 21: Obtain a load indicator sequence of each service in a service cluster corresponding to a workload indicator in a same historical time period; Step 22: Determine, based on the load indicator sequence corresponding to each service, a service representation corresponding to each service; Step 23: Perform clustering processing based on the service representation corresponding to each service, to obtain a target category cluster to which each service belongs in multiple category clusters; Step 24: Obtain multiple sequence prediction models pre-trained for multiple tasks, and enable the multiple category clusters to correspond to the multiple tasks, so as to correspond to the multiple sequence prediction models; and Step 25: Input at least a load indicator sequence of any service into a target sequence prediction model corresponding to a target category cluster of the service in the multiple sequence prediction models, to obtain a first prediction value of a workload indicator corresponding to the service at a target moment after the historical time period. The following describes specific execution manners of the above steps.

First, in step 21, a load indicator sequence of each service in the service cluster corresponding to a workload indicator in a same historical time period is obtained. It can be understood that the load indicator sequence is obtained by arranging indicator values at time points in a chronological order.

In an example, the workload indicator includes a number of CPU cores used.

Embodiments of this specification can implement workload prediction for a service in a service cluster based on stream processing.

Stream computing: is a data processing technology that is used to process and analyze continuously generated data streams in real time. It can process data from multiple data sources and perform immediate computing and responding upon arrival of data.

Data stream: is an infinite sequence formed by continuously generated data. Data streams can come from various sources, such as sensors, log files, networks, etc. and usually can be organized in a chronological order.

Real-time analytics: is used to obtain relevant data insights and results in time through real-time processing and analysis of data streams. Real-time analytics allow decision-making to be based on the latest data to support real-time service response and decision-making.

Data source: provides an original data source of a data stream, which can be a sensor, a database, an application programming interface (API), etc., and provides a data source of the data stream.

Then, in step 22, a service representation corresponding to each service is determined based on the load indicator sequence corresponding to each service. It can be understood that a load indicator sequence of a service can reflect a temporal characteristic of task volume evolution of the service, and therefore, a service representation can also reflect the temporal characteristic.

In an example, determining the service representation corresponding to each service includes:
obtaining a system indicator sequence of a system status indicator of each service and related to workload, and obtaining, based on the system indicator sequence, a first representation corresponding to each service;
determining, based on the load indicator sequence corresponding to each service, a second representation corresponding to each service; and
performing combination processing on a first representation of any service and a second representation of the service, to obtain a service representation corresponding to the service.

In this example, a system indicator sequence of a service can reflect a service source, so a first representation can reflect a spatial characteristic of task volume evolution. A load indicator sequence of a service can reflect a temporal characteristic of task volume evolution of the service, so a second representation can reflect the temporal characteristic. Combination processing is performed on a first representation of any service and a second representation of the service to obtain a service representation corresponding to the service, where the service representation can reflect a temporal characteristic and a spatial characteristic of task volume evolution. The above-mentioned combination processing can include but is not limited to a manner such as splicing.

Further, the workload indicator includes a number of CPU cores used; and the system status indicator includes at least one of the following: a system response time, CPU utilization, and a number of CPU requests.

Further, obtaining the first representation corresponding to each service includes:
determining an initial code of each service based on the system indicator sequence of each service; and
inputting the initial code corresponding to each service into a first neural network to obtain the first representation corresponding to each service.

In this example, a correlation between services can be obtained based on system indicator sequences of the services, an initial code corresponding to each service is determined based on the correlation, and then a first representation corresponding to each service is obtained by using a first neural network. The first representation can reflect a spatial characteristic of the service.

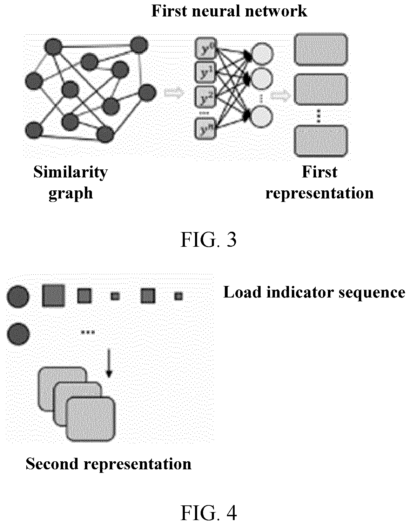

FIG. 3 is a schematic diagram illustrating a generation manner of a first representation, according to an embodiment. Referring to FIG. 3, a similarity graph is established based on a correlation between services. The similarity graph includes multiple nodes. Each node represents one service. A connection edge exists between nodes corresponding to two related services. Initial codes y⁰, y¹, y², ..., and yⁿ respectively corresponding to the services are determined based on the similarity graph. Then, a first representation corresponding to each service is obtained by using a first neural network. It can be understood that the graph shows multiple first representations.

Further, determining the second representation corresponding to each service includes:
inputting a load indicator sequence corresponding to any service into a second neural network that performs time sequence processing, to obtain a time sequence representation corresponding to the service as a second representation of the service.

In this example, a second representation of a service is obtained through time sequence processing, and the second representation can reflect a temporal characteristic of the service.

FIG. 4 is a schematic diagram illustrating a generation manner of a second representation, according to an embodiment. Referring to FIG. 4, each circle represents one service. The figure shows load indicator sequences respectively corresponding to multiple services. Correspondingly, second representations respectively corresponding to the multiple services are obtained.

Next, in step 23, clustering processing is performed based on the service representation corresponding to each service, to obtain a target category cluster to which each service belongs in multiple category clusters. It can be understood that, when a historical time period is different, a load indicator sequence may change, and correspondingly, a service representation can be affected, and a target category cluster to which the same service belongs may be affected.

Clustering is an unsupervised learning method, and is used to group data samples that have similar features into different categories or clusters. The objective is to maximize sample similarity within the same category and minimize sample similarity between different categories. A clustering algorithm calculates a distance or similarity between samples and performs grouping according to the similarity to discover a hidden pattern and structure in data. Common clustering algorithms include K-Means, DBSCAN, hierarchical clustering, etc.

In this embodiment of this specification, a specific number of the multiple category clusters can be predetermined.

Optionally, when the service representation is obtained based on the above-mentioned first representation and second representation, spatial and temporal features of task volume data can be integrated. The task volume data of the services are clustered by using an integrated feature, so the services are classified into different categories. As such, complex spatial and temporal features of task volume evolution can be better understood.

Then, in step 24, multiple sequence prediction models pre-trained for multiple tasks are obtained, and the multiple category clusters are enabled to correspond to the multiple tasks, so as to correspond to the multiple sequence prediction models. It can be understood that there is a one-to-one correspondence between category clusters and tasks, and the number of category clusters equals the number of tasks.

In this embodiment of this specification, the sequence prediction model can be but is not limited to using a long short-term memory (LSTM), a gate recurrent unit (GRU), etc.

In an example, enabling the multiple category clusters to correspond to the multiple tasks includes:
determining, based on service representations respectively corresponding to each service corresponding to a same target category cluster, a category representation corresponding to the target category cluster; and
enabling each category cluster to correspond to each task based on a category representation of each category cluster and task description information of each task.

In this example, services that have similar features are automatically classified in a clustering manner, a category cluster is formed through better summarizing, and a category cluster is automatically enabled to correspond to a task by using a category representation, that is, a service in the category cluster is enabled to correspond to a task.

In an example, the multiple sequence prediction models are trained in the following manners:
determining, through a first training phase, a target initialization parameter shared by the multiple sequence prediction models; and
separately updating each sequence prediction model based on the target initialization parameter through a second training phase.

In this example, a training manner of meta-learning is used, and a corresponding sequence prediction model is selected according to a category of task volume data to perform prediction. Each category is considered as an independent task, and a local parameter is initialized from a global parameter through meta-learning, so it can quickly adapt to a new task volume pattern and change.

Meta-learning is a machine learning method, and is intended to enable a machine learning algorithm to have the capability to learn how to learn. It can adapt to a new task faster and more effectively by summarizing learning experience of multiple different tasks. Meta-learning focuses mainly on design and selection of learning algorithms so it can automatically learn strategies applicable to a new task from existing experience. Meta-learning usually includes two levels of learning: A meta-learner learns how to learn and generates a learner applicable to different tasks.

Further, the first training phase includes multiple rounds of iterations, and any round of iteration includes:
obtaining a current initialization parameter shared by the multiple sequence prediction models;
for a sequence prediction model corresponding to any task, updating the current initialization parameter based on a first training sample set corresponding to the task, to obtain a current dedicated model of the task;
determining a single prediction loss of a current dedicated model corresponding to any task for the first test sample set under the task; and
updating the current initialization parameter based on a sum of single prediction losses respectively corresponding to the tasks.

In this example, based on the previously obtained categories, a specific task is dynamically adapted through meta-learning, which not only learns a specific pattern of each task, but also learns a common infrastructure or principle of different tasks.

Further, the second training phase includes:
for a sequence prediction model corresponding to any task, updating the target initialization parameter by using a second training sample set under the task, to obtain a dedicated parameter of the task.

In this example, a small number of samples can be used to fine-tune these target initial parameters to different fine-grained models, thereby making fast and accurate prediction.

In this embodiment of this specification, the sequence prediction model can be jointly trained with the above-mentioned neural network used to obtain a first representation or a second representation, and fine-tuning of a clustering result is guided by a subsequent prediction error, thereby improving accuracy.

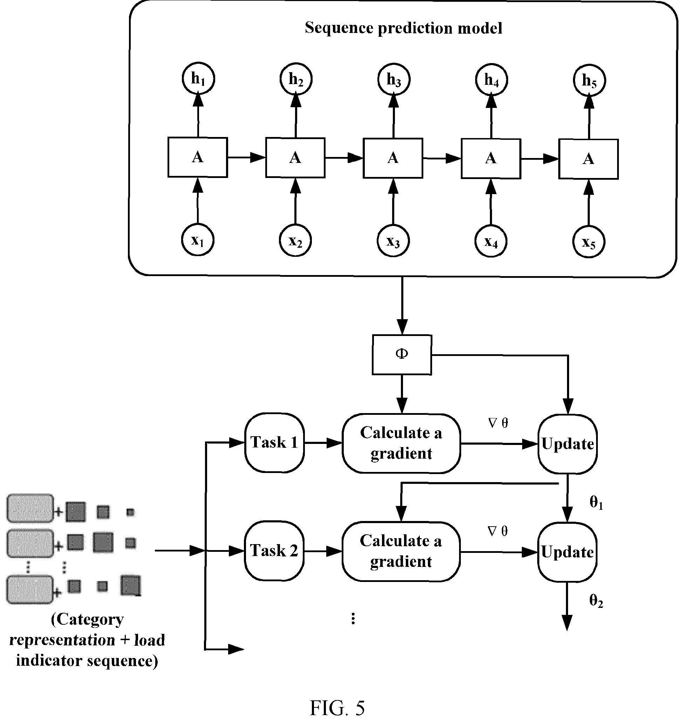

FIG. 5 is a schematic diagram illustrating a training manner of multiple sequence prediction models, according to an embodiment. Referring to FIG. 5, multiple sequence prediction models obtained after training have a unified model structure, but only have different model parameters. The entire training process is divided into a first training phase and a second training phase.

In the first training phase, assume that a shared initialization parameter corresponding to each sequence prediction model of each task is ϕ. First, for a sequence prediction model corresponding to any task, first gradient descent is performed by using a first training sample set corresponding to the task. Assume that only one time of gradient descent is performed on each task, that is, a dedicated parameter of a model obtained for a task 1 is θ₁=ϕ-η· ∂l(ϕ)/∂(ϕ), a dedicated parameter of a model obtained for a task 2 is θ₂=ϕ-η· ∂l(ϕ)/∂(ϕ), and so on. A dedicated parameter corresponds to a dedicated model of a corresponding task. Then, for a dedicated model corresponding to any task, a single prediction loss of the task is determined by using a first test sample set corresponding to the task. Then, based on the sum of single prediction losses corresponding to tasks, second gradient descent is performed, that is, the initialization parameter ϕ is updated, that is, ϕ = ϕ-η· ∂L(ϕ)/∂(ϕ). As such, the above-mentioned first gradient descent and second gradient descent are repeatedly performed to obtain a relatively good target initialization parameter ϕ.

In the second training phase, for a sequence prediction model corresponding to any task, the target initialization parameter ϕ is updated by using a second training sample set under the task, to obtain a dedicated parameter of the task. There can be more gradient descent steps, which is not the same as only one step of gradient descent in the first training phase. After the training ends, the model can be evaluated by using the second test sample set under this task.

Meta-learning can quickly adapt to a new task or environment. By creating different dedicated parameters for different tasks, consideration of context importance is prioritized. Based on the previously obtained categories, by dynamic adaptation to a specific task, meta-learning can not only learn a specific pattern of each task, but also learn a common infrastructure or principle of different tasks. Based on a shared initialization parameter, fine-tuning is performed to obtain different fine-grained models to make fast and accurate prediction.

Finally, in step 25, at least a load indicator sequence of any service is input into a target sequence prediction model corresponding to a target category cluster of the service in the multiple sequence prediction models, to obtain a first prediction value of a workload indicator corresponding to the service at a target moment after the historical time period. It can be understood that a category cluster to which a service belongs determines a sequence prediction model used to predict its workload, thereby making a prediction result more accurate.

In an example, inputting at least the load indicator sequence of any service into the target sequence prediction model corresponding to the target category cluster of the service in the multiple sequence prediction models includes:
inputting the load indicator sequence of the any service and a category representation of the target category cluster corresponding to the service into the target sequence prediction model.

In this example, not only a load indicator sequence of a service is input into the target sequence prediction model, but also a category representation of a target category cluster corresponding to the service is input into the target sequence prediction model, which helps improve prediction accuracy.

In an example, the method further includes:
obtaining, by using the target sequence prediction model, a predicted change trend of the workload indicator corresponding to the service at the target moment after the historical time period relative to a current moment,
for example, a rising or falling trend of an indicator value.

According to the method provided in the embodiments of this specification, first, a load indicator sequence of each service in a service cluster corresponding to a workload indicator in a same historical time period is obtained; then, a service representation corresponding to each service is determined based on the load indicator sequence corresponding to each service; then, clustering processing is performed based on the service representation corresponding to each service, to obtain a target category cluster to which each service belongs in multiple category clusters; then, multiple sequence prediction models pre-trained for multiple tasks are obtained, and the multiple category clusters are enabled to correspond to the multiple tasks, so as to correspond to the multiple sequence prediction models; and finally, at least a load indicator sequence of any service is input into a target sequence prediction model corresponding to a target category cluster of the service in the multiple sequence prediction models, to obtain a first prediction value of a workload indicator corresponding to the service at a target moment after the historical time period. It can be understood from the above-mentioned description that, in the embodiments, multiple sequence prediction models are pre-trained for multiple tasks, which is different from a unified model: The unified model uses a set of parameters for all services. Therefore, there is a limitation in capturing data changes in a large region, a result of thereof preferentially considers some services, and performance for other services is much worse. A clustering-based model can alleviate these disadvantages, determine, based on a load indicator sequence corresponding to each service, a service representation corresponding to each service, perform clustering processing on the service representation of each service, find a corresponding sequence prediction model according to a clustering result, and predict workload, so as to satisfy diversified online computing service demands and improve prediction accuracy.

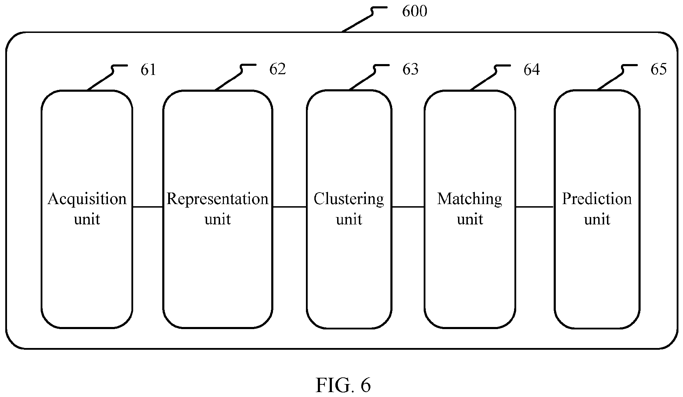

According to an embodiment of another aspect, there is further provided a workload prediction apparatus for a service in a service cluster, and the apparatus is configured to perform the method provided in the embodiments of this specification. FIG. 6 is a schematic block diagram illustrating a workload prediction apparatus for a service in a service cluster, according to an embodiment. As shown in FIG. 6, the apparatus 600 includes:
an acquisition unit 61, configured to obtain a load indicator sequence of each service in the service cluster corresponding to a workload indicator in a same historical time period;
a representation unit 62, configured to determine, based on the load indicator sequence corresponding to each service as obtained by the acquisition unit 61, a service representation corresponding to each service;
a clustering unit 63, configured to perform clustering processing based on the service representation corresponding to each service as obtained by the representation unit 62, to obtain a target category cluster to which each service belongs in multiple category clusters;
a matching unit 64, configured to: obtain multiple sequence prediction models pre-trained for multiple tasks, and enable the multiple category clusters obtained by the clustering unit 63 to correspond to the multiple tasks, so as to correspond to the multiple sequence prediction models; and
a prediction unit 65, configured to input at least a load indicator sequence of any service as obtained by the acquisition unit 61 into a target sequence prediction model corresponding to a target category cluster of the service as obtained by the matching unit in the multiple sequence prediction models, to obtain a first prediction value of a workload indicator corresponding to the service at a target moment after the historical time period.

Optionally, in an embodiment, the representation unit 62 includes:
a first representation subunit, configured to: obtain a system indicator sequence of a system status indicator of each service and related to workload, and obtain, based on the system indicator sequence, a first representation corresponding to each service;
a second representation subunit, configured to determine, based on the load indicator sequence corresponding to each service, a second representation corresponding to each service; and
a combination subunit, configured to perform combination processing on a first representation of any service obtained by the first representation subunit and a second representation of the service obtained by the second representation subunit, to obtain a service representation corresponding to the service.

Further, the workload indicator includes a number of CPU cores used; and the system status indicator includes at least one of the following: a system response time, CPU utilization, and a number of CPU requests.

Further, the first representation subunit is specifically configured to determine an initial code of each service based on the system indicator sequence of each service; and input the initial code corresponding to each service into a first neural network to obtain the first representation corresponding to each service.

Further, the second representation subunit is specifically configured to input a load indicator sequence corresponding to any service into a second neural network that performs time sequence processing, to obtain a time sequence representation corresponding to the service as a second representation of the service.

Optionally, in an embodiment, the matching unit 64 includes:
a category representation subunit, configured to determine, based on service representations respectively corresponding to each service corresponding to a same target category cluster, a category representation corresponding to the target category cluster; and
a matching subunit, configured to enable each category cluster to correspond to each task based on a category representation of each category cluster obtained by the category representation subunit and task description information of each task.

Further, the prediction unit 65 is specifically configured to input the load indicator sequence of the any service and a category representation of the target category cluster corresponding to the service into the target sequence prediction model.

Optionally, in an embodiment, the multiple sequence prediction models are trained in the following manners:
determining, through a first training phase, a target initialization parameter shared by the multiple sequence prediction models; and
separately updating each sequence prediction model based on the target initialization parameter through a second training phase.

Further, the first training phase includes multiple rounds of iterations, and any round of iteration includes:
obtaining a current initialization parameter shared by the multiple sequence prediction models;
for a sequence prediction model corresponding to any task, updating the current initialization parameter based on a first training sample set corresponding to the task, to obtain a current dedicated model of the task;
determining a single prediction loss of a current dedicated model corresponding to any task for the first test sample set under the task; and
updating the current initialization parameter based on a sum of single prediction losses respectively corresponding to the tasks.

Further, the second training phase includes:
for a sequence prediction model corresponding to any task, updating the target initialization parameter by using a second training sample set under the task, to obtain a dedicated parameter of the task.

Optionally, in an embodiment, the prediction unit 65 is further configured to obtain, by using the target sequence prediction model, a predicted change trend of the workload indicator corresponding to the service at the target moment after the historical time period relative to a current moment,

According to the apparatus provided in the embodiments of this specification, first, the acquisition unit 61 obtains a load indicator sequence of each service in a service cluster corresponding to a workload indicator in a same historical time period; then, the representation unit 62 determines a service representation corresponding to each service based on the load indicator sequence corresponding to each service; then, the clustering unit 63 performs clustering processing based on the service representation corresponding to each service, to obtain a target category cluster to which each service belongs in multiple category clusters; then, the matching unit 64 obtains multiple sequence prediction models pre-trained for multiple tasks, and enables the multiple category clusters to correspond to the multiple tasks, so as to correspond to the multiple sequence prediction models; and finally, the prediction unit 65 inputs at least a load indicator sequence of any service into a target sequence prediction model corresponding to a target category cluster of the service in the multiple sequence prediction models, to obtain a first prediction value of a workload indicator corresponding to the service at a target moment after the historical time period. It can be understood from the above-mentioned description that, in the embodiments, multiple sequence prediction models are pre-trained for multiple tasks, which is different from a unified model: The unified model uses a set of parameters for all services. Therefore, there is a limitation in capturing data changes in a large region, a result of thereof preferentially considers some services, and performance for other services is much worse. A clustering-based model can alleviate these disadvantages, determine, based on a load indicator sequence corresponding to each service, a service representation corresponding to each service, perform clustering processing on the service representation of each service, find a corresponding sequence prediction model according to a clustering result, and predict workload, so as to satisfy diversified online computing service demands and improve prediction accuracy.

According to an embodiment of another aspect, a computer-readable storage medium is further provided, where the computer-readable storage medium stores a computer program, and when the computer program is executed in a computer, the computer is enabled to perform the method described with reference to FIG. 2.

According to an implementation of still another aspect, a computing device is further provided, including a memory and a processor. The memory stores executable code, and when executing the executable code, the processor implements the method described with reference to FIG. 2.

A person skilled in the art should be aware that in the above-mentioned one or more examples, functions described in this specification can be implemented by hardware, software, firmware, or any combination thereof. When implemented by using software, these functions can be stored in a computer-readable medium or transmitted as one or more instructions or one or more pieces of code on a computer-readable medium.

The objectives, technical solutions, and beneficial effects of this specification are further described in detail in the above-mentioned specific implementations. It should be understood that the above-mentioned descriptions are merely specific implementations of this specification, but are not intended to limit the protection scope of this specification. Any modification, equivalent replacement, or improvement made based on the technical solutions of this specification shall fall within the protection scope of this specification.

## Claims

1. A workload prediction method for a service in a service cluster, comprising:
obtaining a load indicator sequence of each service in the service cluster corresponding to a workload indicator in a same historical time period;
determining, based on the load indicator sequence corresponding to each service, a service representation corresponding to each service;
performing clustering processing based on the service representation corresponding to each service, to obtain a target category cluster to which each service belongs in multiple category clusters;
obtaining multiple sequence prediction models pre-trained for multiple tasks, and enabling the multiple category clusters to correspond to the multiple tasks, so as to correspond to the multiple sequence prediction models; and
inputting at least a load indicator sequence of any service into a target sequence prediction model corresponding to a target category cluster of the service in the multiple sequence prediction models, to obtain a first prediction value of a workload indicator corresponding to the service at a target moment after the historical time period.

2. The method according to claim 1, wherein determining the service representation corresponding to each service comprises:
obtaining a system indicator sequence of a system status indicator of each service and related to workload, and obtaining, based on the system indicator sequence, a first representation corresponding to each service;
determining, based on the load indicator sequence corresponding to each service, a second representation corresponding to each service; and
performing combination processing on a first representation of any service and a second representation of the service, to obtain a service representation corresponding to the service.

3. The method according to claim 2, wherein the workload indicator comprises a number of CPU cores used; and the system status indicator comprises at least one of the following: a system response time, CPU utilization, and a number of CPU requests.

4. The method according to claim 2, wherein obtaining the first representation corresponding to each service comprises:
determining an initial code of each service based on the system indicator sequence of each service; and
inputting the initial code corresponding to each service into a first neural network to obtain the first representation corresponding to each service.

5. The method according to claim 2, wherein determining the second representation corresponding to each service comprises:
inputting a load indicator sequence corresponding to any service into a second neural network that performs time sequence processing, to obtain a time sequence representation corresponding to the service as a second representation of the service.

6. The method according to claim 1, wherein enabling the multiple category clusters to correspond to the multiple tasks comprises:
determining, based on service representations respectively corresponding to each service corresponding to a same target category cluster, a category representation corresponding to the target category cluster; and
enabling each category cluster to correspond to each task based on a category representation of each category cluster and task description information of each task.

7. The method according to claim 6, wherein inputting at least the load indicator sequence of any service into the target sequence prediction model corresponding to the target category cluster of the service in the multiple sequence prediction models comprises:
inputting the load indicator sequence of the any service and a category representation of the target category cluster corresponding to the service into the target sequence prediction model.

8. The method according to claim 1, wherein the multiple sequence prediction models are trained in the following manners:
determining, through a first training phase, a target initialization parameter shared by the multiple sequence prediction models; and
separately updating each sequence prediction model based on the target initialization parameter through a second training phase.

9. The method according to claim 8, wherein the first training phase comprises multiple rounds of iterations, and any round of iteration comprises:
obtaining a current initialization parameter shared by the multiple sequence prediction models;
for a sequence prediction model corresponding to any task, updating the current initialization parameter based on a first training sample set corresponding to the task, to obtain a current dedicated model of the task;
determining a single prediction loss of a current dedicated model corresponding to any task for the first test sample set under the task; and
updating the current initialization parameter based on a sum of single prediction losses respectively corresponding to the tasks.

10. The method according to claim 8, wherein the second training phase comprises:
for a sequence prediction model corresponding to any task, updating the target initialization parameter by using a second training sample set under the task, to obtain a dedicated parameter of the task.

11. The method according to claim 1, wherein the method further comprises:
obtaining, by using the target sequence prediction model, a predicted change trend of the workload indicator corresponding to the service at the target moment after the historical time period relative to a current moment.

12. A computer-readable storage medium that stores a computer program, wherein when executed on a computer, the computer program causes the computer to perform the method according to any one of claims 1 to 11.

13. A computing device, comprising a memory and a processor, wherein the memory stores executable code, and when executing the executable code, the processor implements the method according to any one of claims 1 to 11.

14. A computer program comprising computer executable instructions which when executed by a processor cause the processor to implement the method of any one of claims 1 to 11.

15. An apparatus comprising means for performing the steps of the method of any one of claims 1 to 11.
